# EUROPÄISCHE PATENTSCHRIFT

(11) **EP 2 169 291 B1**
(45) Veröffentlichungstag und Bekanntmachung des Hinweises auf die Patenterteilung: **19.10.2011**
(21) Anmeldenummer: 09154589.7
(22) Anmeldetag: 09.03.2009
(51) Int. Cl.: F16L 21/00

(54) **Rohrförmiges Übergangsstück und zusammensetzbares Rohrsystem**
Tubular transition piece and composable tube system
Pièce de raccordement tubulaire et système de tube pouvant être assemblé

(30) Priorität: 24.09.2008 CH 15162008
(43) Veröffentlichungstag der Anmeldung: 31.03.2010
(73) Patentinhaber: BRUBA AG, 9496 Balzers (LI)
(72) Erfinder: Brunhart, Walter, 9496, Balzers (LI)
(74) Vertreter: Hasler, Erich

(56) Entgegenhaltungen:
- EP-A- 1 630 322

## Beschreibung

### Gebiet der Erfindung

Die Erfindung betrifft ein rohrförmiges Übergangsstück gemäss Oberbegriff von Anspruch 1 und ein zusammensetzbares Rohrsystem gemäss Oberbegriff von Anspruch 13.

### Stand der Technik

Beim Neubau oder der Sanierung von Kaminen sind seit einiger Zeit Kaminrohrsysteme im Einsatz, die aus zusammensteckbaren Rohrsegmenten bestehen. Die Rohrsegmente weisen ein erstes konisches weibliches Endstück und ein zweites konisches männliches Endstück auf. Das männliche konische Endstück eines ersten Rohrsegmentes passt formschlüssig in das weibliche konische Endstück eines zweiten Rohrsegmentes. So kann ein beliebig langes zusammengesetztes Kaminrohr aufgebaut werden. Die Steckverbindung zwischen zwei Rohrsegmenten muss hinreichende Haltekräfte zwischen den beiden Rohrsegmenten aufweisen und nach der Prüfnorm DIN EN 1856 -1 bis zu einem inneren Überdruck von 200 Pa gas- und kondensatdicht sein.

Es existieren Kaminrohrsysteme bei denen die Konuswinkel des männlichen und des weiblichen Endstückes gleich gross oder verschieden sind. Ein Nachteil der beschriebenen Rohrsegmente ist allerdings, dass deren Länge vorgegeben ist. Dadurch kann das Kaminrohrsystem vor Ort nur mit erheblichem Aufwand an die vorgegebenen Kaminabmessungen adaptiert werden. Eine Möglichkeit der Anpassung besteht darin, Rohrsegmente mit den entsprechenden erforderlichen Längen beim Hersteller in Auftrag zu geben. Diese Möglichkeit setzt die Kenntnis der genauen Abmessungen des Kamins voraus. Adaptierungen während des Einbaues des Kaminrohrsystems führen daher zu unerwünschten zeitlichen Verzögerungen. Eine weitere Möglichkeit stellt das Ausformen des männlichen oder weiblichen Konus an einem entsprechend abgelängten Rohrsegment direkt an der Baustelle dar. Diese Möglichkeit erfordert allerdings das Zurverfügungstellen von entsprechenden Werkzeugen durch den Hersteller des Kaminrohrsystems. Nachteile dieser Variante sind zum einen zusätzliche Investitionskosten und zum anderen oftmals die fehlende Präzision der vor Ort ausgeformten Konen, bedingt durch erschwerte Bedingungen auf der Baustelle und oftmals sich unter Zeitdruck befindendes Fachpersonal.

Die EP 1 630 322 A1 beschreibt ein undurchlässiges Verbindungssystem für Kamine und vorgefertigte modulare Rohre. Ein rohrförmiges Modul besitzt am einen Ende einen divergenten Bereich, der in ein zylindrisches Endstück mündet. Das zylindrische Endstück des Moduls ist mit einer oder mehreren kreisringförmigen Sicken ausgestattet. Die Sicken sind im Querschnitt halbkreisförmig und erstrecken sich in Umfangsrichtung des zylindrischen Endstücks. Ein zylindrisches Rohrstück, mit einem Durchmesser, welcher dem Durchmesser des rohrförmigen Moduls vor dem divergenten Bereich entspricht, ist in das erweiterte zylindrische Endstück des Moduls einführbar. Die Dichtigkeit zwischen dem rohrförmigen Modul und dem zylindrischen Rohrstück wird durch eine kreisringförmige Berührungslinie zwischen einer oder mehreren Sicken und dem zylindrischen Rohrstück erzielt. Die radiale Fixierung der Rohrverbindung wird ebenfalls durch eine oder mehrere Sicken erreicht. Die Bauweise dieses Verbindungssystems ist insofern nachteilig, als das Verbindungssystem nur dann dicht ist, wenn es sehr geringe Fertigungstoleranzen erfüllt. Ist der Abstand zwischen dem Aussendurchmesser des zylindrischen Rohrstücks einerseits und dem Innendurchmesser der Sicke andererseits zu gross, so ist das Verbindungssystem undicht. Übersteigt der Aussendurchmesser des zylindrischen Rohrstücks den Innendurchmesser der Sicke, so ist das zylindrische Rohrstück nicht einführbar. Ein weiterer Nachteil ist, dass auch eine Abweichung von der Kreisform des Querschnitts des zylindrischen Rohrstücks bzw. der Sicke unweigerlich zu Undichtigkeiten führt. Noch ein Nachteil besteht darin, dass nur linienförmig gedichtet wird. Die Dichtigkeit des Verbindungssystems ist demnach nur für sehr geringe Überdrücke gewährleistet. Ausserdem wird das zylindrische Rohrstück nur durch eine oder mehrere Sicken radial fixiert. Verschwenkungen des Rohrstückes in radialer Richtung, welche ebenfalls zu einer Undichtigkeit der Rohrverbindung führt, sind daher schon mit geringem Kraftaufwand möglich.

### Aufgabe der Erfindung

Aufgabe der vorliegenden Erfindung ist es daher, ein Kaminrohrsystem vorzuschlagen, das die oben angeführten Nachteile nicht aufweist. Ziel ist insbesondere ein Kaminrohrsystem zur Verfügung zu stellen, das sich mit geringem zeitlichen Aufwand vom Fachpersonal auf der Baustelle an die vorgegebenen baulichen Abmessungen anpassen lässt und dabei die nach der Prüfnorm DIN EN 1856 - 1 geforderten Dichtigkeitsanforderungen erfüllt. Noch eine Aufgabe ist es, die zusätzlichen Investitionskosten gering zu halten, indem auf der Baustelle keine speziellen und teuren Werkzeuge benötigt werden, um das Kaminrohrsystem an die baulichen Abmessungen anzupassen.

### Beschreibung

Erfindungsgemäss wird die Aufgabe durch ein rohrförmiges Übergangsstück zum Einbau zwischen zwei Rohrsegmenten gemäss Oberbegriff von Anspruch 1 dadurch gelöst, dass die Kegel-Mantelfläche des männlichen Endstücks eine rotationssymmetrische Fügefläche aufweist, welche Fügefläche einen geringeren Durchmesser besitzt als die Kegel-Mantelfläche des männlichen Endstücks. Das erfindungsgemässe Übergangsstück hat gegenüber dem eingangs erwähnten Stand der Technik den Vorteil, dass bei Aufnahme eines zylindrische Rohrsegments an der Fügefläche eine Dichtfläche gebildet wird, die eine verbesserte Dichtigkeit im Vergleich zu den linienförmigen Dichtelementen des Stands der Technik besitzt. Dadurch können zylindrische Rohrsegmente exakt auf die jeweiligen Anforderungen abgelängt werden und anschliessend dichtend mit dem Übergangstück verbunden werden.

Mit Vorteil ist die Fügefläche durch Stufen von den übrigen Abschnitten des männlichen Endstückes getrennt. Dadurch wird der Fügefläche ausreichend Platz gegeben, sich an zylindrische Rohrsegmente anzuschmiegen.

In einer vorteilhaften Ausführungsvariante weist die Konizität der rotationssymmetrischen Fügefläche mit Abweichungen von maximal ± 5 Grad die Konizität des männlichen Endstückes auf. Durch die geringe Abweichung der Konizität der Fügefläche und des männlichen Endstücks bildet sich beim Einführen eines zylindrischen Rohrstückes eine Dichtfläche aus, die mit abnehmender Konizität in ihrer Kontaktfläche zum zylindrischen Rohrstück zunimmt.

Dadurch, dass im Anschluss an das erweiterte Ende des männlichen Endstückes ein sich verjüngender Konus ausgebildet ist, werden von dem rohrförmigen Übergangsstück aufgenommene zylindrische Rohrsegmente zuverlässig in axialer Richtung fixiert. Dies ist für die dauerhafte Dichtigkeit zwischen dem Übergangstück und dem zylindrischen Rohrsegment essentiell.

Zur Verbindung des männlichen Endstücks und des Konus ist mit Vorteil ein Übergangsbereich vorgesehen. Der Übergangsbereich erlaubt eine Verbindung zwischen männlichem Endstück und Konus auch dann, wenn deren grösste Durchmesser von einander abweichen.

Um einen sicheren und von Verletzungsrisiko freien Einbau des Übergangsstückes zu erlauben, weist der Übergangsbereich zweckmässigerweise eine nach aussen gerichtete Stufe mit runden Ecken auf.

Gemäss einer bevorzugten Ausführungsform besitzt der Konus an seiner Mantelfläche eine rotationssymmetrische sich in das Innere des Konus erstreckende Sicke auf, welche die Form eines Konus oder eines Zylinders aufweist. Die Sicke steigert die Stabilität des Konus bei gleichzeitig geringer Wandstärke. Die geringe Wandstärke ist wiederum für die gute Verformbarkeit der Fügefläche unerlässlich.

Zum leichteren Einführen des zylindrischen Rohrsegmentes in das Übergangsstück zeigt der Konus an seinem verjüngten Ende einen Bördelrand.

Vorteilhaft entspricht der Innendurchmesser am verjüngten Ende des Konus nahezu dem Durchmesser des zylindrischen Teiles des Rohrsegmentes. Diese Ausführungsform garantiert eine sichere Stabilisierung von zylindrischen Rohrsegmenten, indem Schwenkbewegungen der Rohrsegmente in radialer Richtung vermieden werden.

Damit aggressive Gase bzw. Fluide das Übergangsstück nicht in Mitleidenschaft ziehen, ist das Übergangsstück vorzugsweise aus Edelstahlblech gefertigt.

Gegenstand der vorliegenden Erfindung ist auch ein zusammensetzbares Rohrsystem gemäss Oberbegriff von Anspruch 13. Ein solches Rohrsystem umfasst einzelne Rohrsegmente mit einem ersten weiblichen Endstück mit einer Kegel-Mantelfläche und einer ersten Öffnung und einem zweiten männlichen Endstück mit einer Kegeleiner ersten Öffnung und einem zweiten männlichen Endstück mit einer Kegel-Mantelfläche und einer zweiten Öffnung. Das zweite Endstück passt formschlüssig in das erste Endstück. Das Rohrsystem umfasst auch das oben beschriebene rohrförmige Übergangsstück, welches ein männliches Endstück mit einer Kegel-Mantelfläche für einen Formschluss in eine Kegel-Mantelfläche eines weiblichen Endstücks eines Rohrsegmentes besitzt. Das Übergangsstück weist eine verformbare rotationssymmetrische Fügefläche zur Aufnahme eines zylindrischen Endstückes auf. Die Fügefläche hat den Vorteil, dass sie sich an das zylindrische Rohrsegment anpasst und dadurch auch kleine Abweichungen im Durchmesser des zylindrischen Endstückes ausgleichen kann. Zweckmässigerweise ist das Übergangsstück des Rohrsystems gemäss einem der Ansprüche 1 bis 12 ausgebildet.

Nachfolgend wird die Erfindung unter Bezugnahme auf die Figuren in schematischer Darstellung näher im Detail beschrieben. In den Figuren sind grundsätzlich gleiche Teile mit gleichen Bezugsziffern versehen. Es zeigt:
- Figur 1:: ein erstes Ausführungsbeispiel eines Übergangsstücks im Quer- schnitt mit einem konischen Halteelement;
- Figur 2: ein zweites Ausführungsbeispiel eines Übergangsstücks im Quer- schnitt mit einem zylindrischen Halteelement;
- Figur 3:: das Übergangstück aus Figur 1 in ein Rohrsystem integriert, vor der Fixierung eines Rohrsegmentes;
- Figur 4:: das Rohrsystem aus Figur 2 nach der Fixierung eines Rohrseg- ments;
- Figur 5:: eine Detailansicht eines Ausschnittes aus Figur 3 zur Verdeutli- chung der Wirkweise des Übergangsstückes.

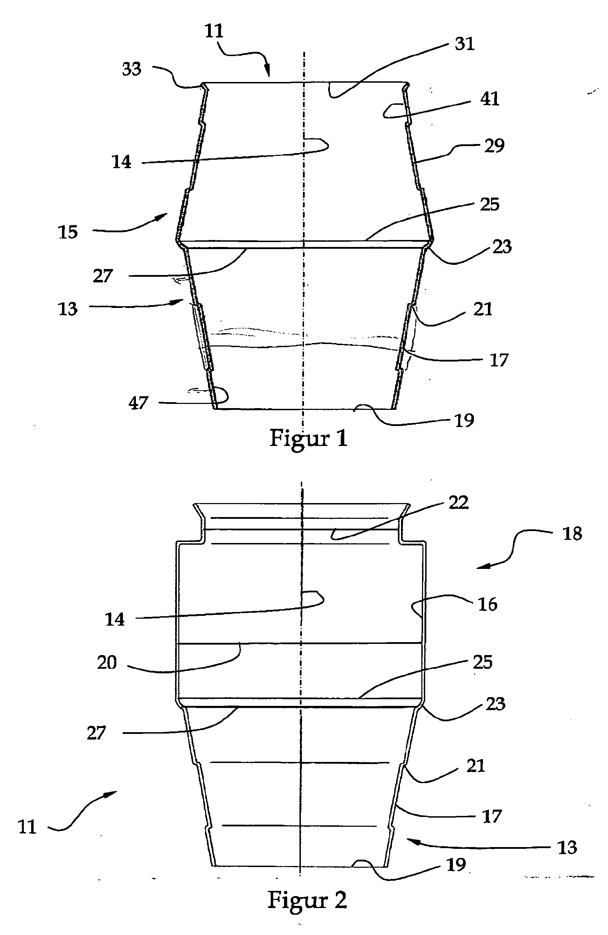

Das in Figur 1 dargestellte rohrförmige Übergangsstück 11 besteht im Wesentlichen aus einem männlichen Endstück 13 mit einer Kegel-Mantelfläche und einem daran anschliessenden sich verjüngenden konischen Haltelement 15. Zwecks besserer Darstellung ist die Neigung der Erzeugenden zur Längsachse 14 des männlichen Endstückes (Anzug des Konus) in den Figuren grösser als in der Realität gezeigt. Der tatsächliche Anzug beträgt 0,5 bis 5 Grad, vorzugsweise 1 bis 3 Grad und ganz bevorzugt 1,1 bis 1,7 Grad. Das konische Endstück 13 besitzt an seiner Mantelfläche eine rotationssymmetrische, sich in den Innenraum erstreckende rotationssymmetrische Fügefläche 17 in Form eines Konus. Denkbar ist aber auch, dass die Fügefläche 17 die Form eines Drehzylinders aufweist. Der Fügebereich 17 befindet sich in Abstand zu einer ersten Öffnung 19 des Übergangsstückes 11. Die Fügefläche 17 ist durch Stufen 21 von der Kegel-Mantelfläche des männlichen Endstücks 13 abgesetzt. Die Mantellinie der konus- oder zylinderförmigen Fügefläche 17 besitzt dabei zumindest 1/4 der Konuslänge des männlichen Endstücks 13, vorzugsweise 1/3 der Konuslänge des männlichen Endstückes 13 und ganz besonders bevorzugt 1/3 bis 2/3 der Konuslänge des männlichen Endstücks 13. Die Verteilung der Konusrestlänge des männlichen Endstückes 13 zu beiden Seiten der Fügefläche 17 beträgt dabei 1:1 bis 1:4. In einer bevorzugten Ausführungsform hat die Fügefläche 17 annähernd und vorzugsweise die gleiche Konizität des männlichen Endstücks 13. Dies erleichtert die Fertigung des rohrförmigen Endstückes 11.

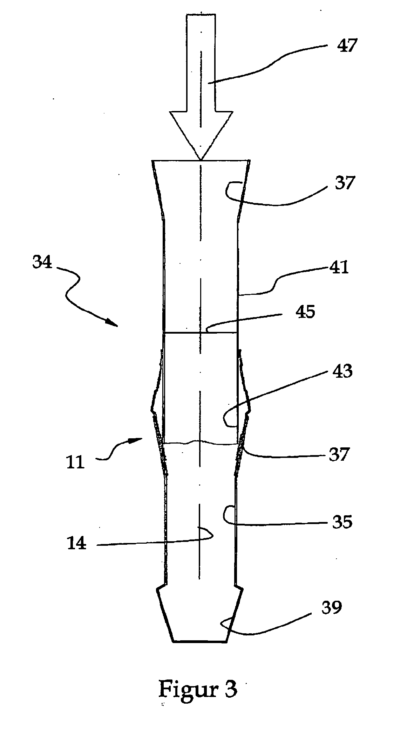

Das an das erweiterte Ende des männlichen Endstückes 13 anschliessende sich verjüngende konische Halteelement 15 ist durch einen Übergangsbereich mit dem Endstück 13 verbunden. Figur 1 lässt erkennen, dass der Übergangsbereich durch eine nach aussen gerichtete Stufe 23 mit runden Ecken realisiert ist. Dadurch übersteigt der grösste Durchmesser 25 des Halteelements 15 in seinen Abmessungen den grössten Durchmesser 27 des Endstückes 13. Denkbar wäre aber auch ein Übergangsbereich, der das Halteelement 15 und das Endstück 13 verbindet, wenn die Durchmesser 25 und 27 andere Grössenverhältnisse aufweisen. Das konische Halteelement 15 besitzt eine Sicke 29, die sich in das innere des Halteelements 15 erstreckt und die Form eines Konus oder eines Zylinders hat. Die Sicke 29 ist von der zweiten Öffnung 31 des rohrförmigen Übergangsstückes 11 beabstandet. Das Halteelement 15 ist an seinem verjüngten Ende durch eine Bördelnaht 33 abgeschlossen, durch welche die Öffnung 31 gebildet ist. Denkbar ist es auch, dass anstatt des konischen Halteelements 15 ein zylindrisches Halteelement 16 zur Anwendung kommt. In diesem Ausführungsbeispiel schliesst das zylindrische Halteelement 16 an die Stufe 23. Im Anschluss an das Halteelement 16 ist ein Reduzierstück 18 angeformt, welches ebenfalls durch eine Bördelnaht 33 abgeschlossen ist. Das Reduzierstück 18 verringert den Durchmesser 20 des zylindrischen Halteelements auf den Durchmesser 22 des Reduzierstücks 18. Der Durchmesser 22 ist derart bemessen, dass ein zylindrisches Rohrstück 43 in dem Reduzierstück 18 formschlüssig gehalten wird. Das heisst der Innendurchmesser 22 des zylindrischen Halteelements 16 ist geringfügig grösser als der Aussendurchmesser 45 des zylindrischen Rohrstücks 43 (Figur 2 und 3).

Das rohrförmige Übergangsstück 11 ist Teil eines Rohrsystems 34 und funktioniert nach den Figuren 3 bis 5 wie folgt: Das rohrförmige Übergangsstück 11 dient der Verbindung eines Rohrsegmentes 35 mit einem ersten weiblichen Endstück 37 und einem zweiten männlichen Endstück 39 und einem Rohrsegment 41 mit einem ersten zylindrischen Endstück 43 und einem zweiten weiblichen Endstück 37. Die Mäntel der Endstücke 37 und 39 sind als Kegel-Mantelflächen ausgebildet, wobei das weibliche Endstück 37 und das männliche Ende 39 sich zu einem gas- und kondensatdichten Formschluss bis 200 Pa nach der Prüfnorm DIN EN 1856 - 1 zusammenfügen lassen. Rohrsegmente 35 sind aneinandergefügt, um ein Rohrsystem der benötigten Länge zu bilden. Da die Rohrsegmente 35 bestimmte Längen aufweisen, ist es nicht möglich, die gesamte Länge des Rohrsystems 34 genau an die baulichen Abmessungen z. B. eines Kamins anzupassen. Genaue Anpassungen sind insbesondere dann notwendig, wenn z. B. Nebenkaminstränge in den Hauptkaminstrang münden. Dann muss die Länge des Rohrsystems 34 so angepasst werden, dass sich das Rohrsystem 34 exakt mit dem Verzweigungsstück (in den Figuren nicht dargestellt) verbinden lässt.

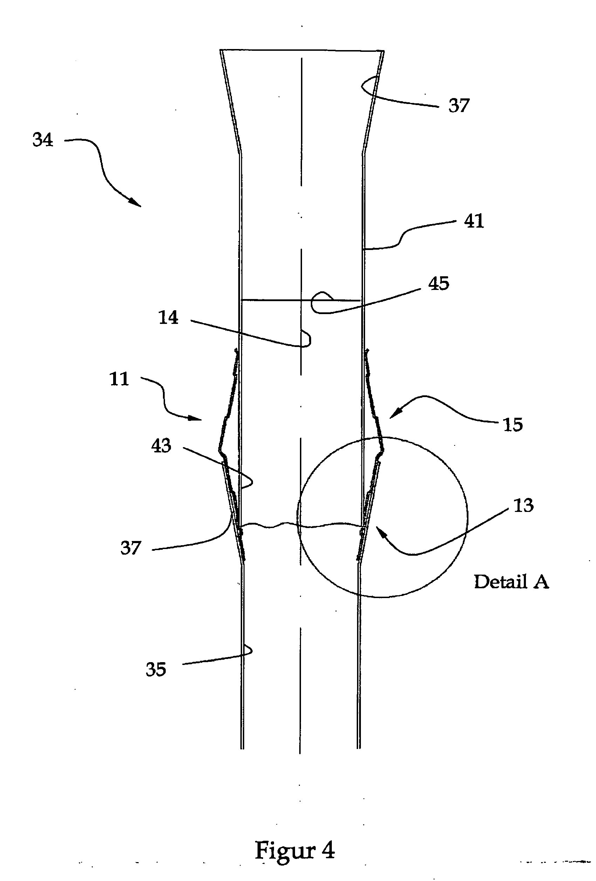

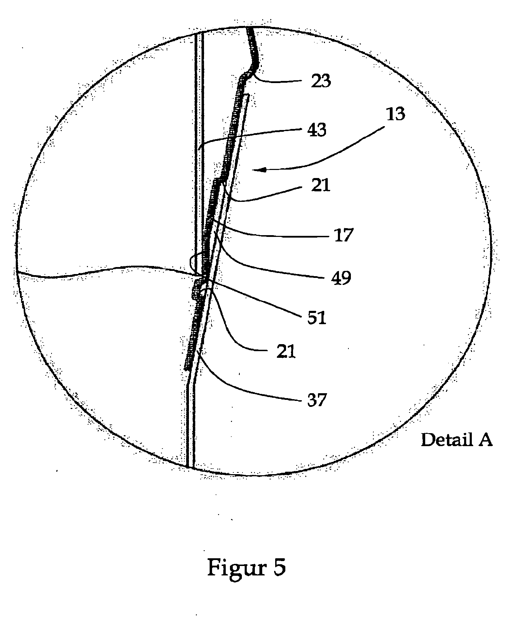

Für die genaue Anpassung des Rohrsystems 34 wird ein Rohrsegment 35 zu einem Rohrsegment 41 der benötigten Länge gekürzt. Beim Kürzen, das ohne Aufwand direkt vor Ort durchgeführt wird, wird das männliche Endstück 39 mitsamt einem entsprechenden an das männliche Endstück anschliessenden zylindrischen Teil des Rohrsegmentes 35 verworfen. Figur 4 lässt erkennen, dass das Übergangsstück 11 mit seinem männlichen Endstück 13 formschlüssig mit dem weiblichen Endstück 37 des Rohrsegments 35 verbunden ist. In die Öffnung 31 des rohrförmigen Übergangsstücks 11 wird nun das Rohrsegment 41 mit seinem zylindrischen Endstück 43 eingefügt. Dabei ist von besonderer Bedeutung, dass die Öffnung 31 in ihrem Durchmesser nur unwesentlich grösser als der Durchmesser 45 des zylindrischen Endstückes 43 ist. Sobald das zylindrische Endstück 43 die Fügefläche 17 des Endstückes 11 berührt, wird eine Kraft 47 in axialer Richtung auf das Rohrsegment 41 aufgebracht. Figur 3 und 4 zeigen, dass sich die Fügefläche 17 von dem zylindrischen Endstück 43 verformen lässt. Dabei wird die Fügefläche 17 in den Freiraum 49 zwischen Fügefläche 17 und weiblichem Endstück 37 verdrängt. Abweichungen der Rohrsegmentlänge zur exakt benötigten Rohrlänge, die durch ungenaues Ablängen entstanden sind, sind durch den Fügebereich 17 kompensierbar. Die Wandstärke des Übergangsstücks 11 muss so dimensioniert sein, dass die Fügefläche 17 von der Einschubkraft verformbar ist und gleichzeitig die geforderte Dichtigkeit zwischen Fügefläche 17 und zylindrischem Endstück 43 aufgebaut wird. Dazu muss sich, wie Figur 5 im Detail zeigt, eine ausreichend grosse Dichtfläche 51 aufbauen.

Nach dem Aufbau der Dichtfläche 51 ist es für das Aufrechterhalten der Dichtigkeit von wesentlicher Bedeutung, dass das Rohrsegment 41 in der einmal eingenommenen Position im Übergangstück fixiert bleibt. Diese Fixierungsaufgabe erfüllt das konische Halteelement 15 mit der Öffnung 31 mit welcher das Rohrsegment 45 bündig abschliesst. Ausreichende Stabilität des Halteelements 15 wird dabei trotz geringer Wandstärken durch die Sicke 29 gewährleistet. Die geringen Wandstärken sind für die notwendige Verformbarkeit der Fügefläche unabdingbar.

### Legende:

- 11: Rohrförmiges Übergangsstück
- 13: Männliches Endstück
- 14: Längsachse des Übergangsstücks
- 15: Konisches Halteelement
- 16: Zylindrisches Halteelement
- 17: Rotationssymmetrische Fügefläche
- 18: Reduzierstück
- 19: Erste Öffnung des rohrförmigen Übergangsstücks 11
- 20: Durchmesser des zylindrischen Halteelements
- 21: Stufen
- 22: Innendurchmesser des Reduzierstückes
- 23: Stufe
- 25: Grösster Durchmesser des Endstückes 13
- 27: Grösster Durchmesser des Konus 15
- 29: Sicke
- 31: Zweite Öffnung des rohrförmiges Übergangsstücks 11
- 33: Bördelnaht
- 34: Rohrsystem
- 35: Rohrsegment
- 37: Weibliches Endstück
- 39: Männliches Endstück
- 41: Rohrsegment
- 43: Zylindrisches Endstück
- 45: Aussendurchmesser des zylindrischen Endstückes
- 47: Axiale Kraft
- 49: Freiraum
- 51: Dichtfläche

## Patentansprüche

1. Rohrförmiges Übergangsstück (11) zum Einbau zwischen zwei Rohrsegmenten (35, 41) mit einer ersten (19) und zweiten Öffnung (31), welches im Anschluss an die erste Öffnung (19) ein männliches Endstück (13) mit einer Kegel-Mantelfläche für einen Formschluss in eine Kegel-Mantelfläche eines weiblichen Endstücks (37) eines Rohrsegmentes (35) besitzt,
**dadurch gekennzeichnet,**
**dass** die Kegel-Mantelfläche des männlichen Endstücks (13) eine rotationssymmetrische Fügefläche (17) aufweist, welche Fügefläche (17) einen geringeren Durchmesser besitzt, als die Kegel-Mantelfläche des männlichen Endstücks (13).

2. Rohrförmiges Übergangsstück (11) nach Anspruch 1, **dadurch gekennzeichnet, dass** die rotationssymmetrische Fügefläche in Abstand zur ersten Öffnung (19) des Übergangsstückes (11) vorgesehen ist.

3. Rohrförmiges Übergangsstück (11) nach Anspruch 2, **dadurch gekennzeichnet, dass** die Fügefläche (17) durch Stufen (21) von den übrigen Abschnitten des männlichen Endstückes (13) getrennt ist.

4. Rohrförmiges Übergangsstück (11) nach einem der Ansprüche 2 bis 3, **dadurch gekennzeichnet, dass** die Konizität der rotationssymmetrischen Fügefläche (17) annähernd die Konizität des männlichen Endstückes (13) oder die gleiche Konizität des männlichen Endstückes (13) aufweist.

5. Rohrförmiges Übergangsstück (11) nach einem der Ansprüche 1 bis 4, **dadurch gekennzeichnet, dass** im Anschluss an das erweiterte Ende des männlichen Endstückes (13) ein sich verjüngender Konus (15) ausgebildet ist.

6. Rohrförmiges Übergangsstück (11) nach Anspruch 5, **dadurch gekennzeichnet, dass** das männliche Endstück (13) und der Konus (15) durch einen Übergangsbereich (23) verbunden sind.

7. Rohrförmiges Übergangsstück (11) nach Anspruch 6, **dadurch gekennzeichnet, dass** der Übergangsbereich (23) eine nach aussen gerichtete Stufe mit runden Ecken aufweist.

8. Rohrförmiges Übergangsstück (11) nach Anspruch 5, **dadurch gekennzeichnet, dass** der Konus (15) an seiner Mantelfläche eine rotationssymmetrische sich in das Innere des Konus erstreckende Sicke (29) aufweist, welche die Form eines Konus oder eines Zylinders aufweist.

9. Rohrförmiges Übergangsstück (11) nach Anspruch 8, **dadurch gekennzeichnet, dass** die Sicke (29) in Abstand zur zweiten Öffnung (31) des rohrförmigen Übergangsstückes (11) vorgesehen ist.

10. Rohrförmiges Übergangsstück (11) nach Anspruch 5, **dadurch gekennzeichnet, dass** der Konus (15) an seinem verjüngten Ende einen Bördelrand (33) aufweist.

11. Rohrförmiges Übergangsstück (11) nach einem der Ansprüche 1 bis 10, **dadurch gekennzeichnet, dass** der Innendurchmesser der zweiten Öffnung (31) des rohrförmigen Übergangsstückes (11) nahezu dem Aussendurchmesser (45) des zylindrischen Teiles (43) des Rohrsegmentes (41) entspricht.

12. Rohrförmiges Übergangsstück (11) nach einem der Ansprüche 1 bis 11, **dadurch gekennzeichnet, dass** das Übergangsstück (11) vorzugsweise aus Edelstahlblech gefertigt ist.

13. Zusammensetzbares Rohrsystem (34), insbesondere zur Herstellung eines Kaminrohrs, umfassend
- einzelne Rohrsegmente (35) mit einem ersten weiblichen Endstück (37) mit einer Kegel-Mantelfläche und einer ersten Öffnung und einem zweiten männlichen Endstück (39) mit einer Kegel-Mantelfläche und einer zweiten Öffnung, welches zweite Endstück (39) formschlüssig in das erste Endstück (37) passt und
- ein rohrförmiges Übergangsstück (11), welches ein männliches Endstück (13) mit einer Kegel-Mantelfläche für einen Formschluss in eine Kegel-Mantelfläche eines weiblichen Endstücks (37) eines Rohrsegmentes (35) besitzt
**dadurch gekennzeichnet,**
**dass** das Übergangstück (11) eine verformbare rotationssymmetrische Fügefläche (17) zur Aufnahme eines zylindrischen Endstückes (43) besitzt.

14. Zusammensetzbares Rohrsystem (34) gemäss Anspruch 13, **dadurch gekennzeichnet, dass** das rohrförmige Übergangsstück (11) gemäss einem der Ansprüche 1 bis 12 ausgebildet ist.

## Claims

1. Tubular transition piece (11) for fitting between two tube segments (35, 41) with a first opening (19) and a second opening (31) which has, following the first opening (19), a male end piece (13) with a conical surface area for a form fit into a conical surface area of a female end piece (37) of a tube segment (35),
**characterized in**
**that** the conical surface area of the male end piece (13) has a rotationally symmetric joining surface (17), which joining surface (17) has a lower diameter than the conical surface area of the male end piece (13).

2. Tubular transition piece (11) according to claim 1, **characterized in that** the rotationally symmetric joining surface (17) is provided spaced from the first opening (19) of the transition piece (11).

3. Tubular transition piece (11) according to claim 2, **characterized in that** the joining surface (17) is separated from the remaining portions of the male end piece (13) by shoulders (21).

4. Tubular transition piece (11) according to any of the claims 2 to 3, **characterized in that** the conicity of the rotationally symmetric joining surface (17) has approximately the conicity of the male end piece (13) or the same conicity of the male end piece (13).

5. Tubular transition piece (11) according to any of the claims 1 to 4, **characterized in that** a tapering cone (15) is configured following the widened end of the male end piece (13).

6. Tubular transition piece (11) according to claim 5, **characterized in that** the male end piece (13) and the cone (15) are connected by a transition area (23).

7. Tubular transition piece (11) according to claim 6, **characterized in that** the transition area (23) has an outwards orientated step with round corners.

8. Tubular transition piece (11) according to claim 5, **characterized in that** the cone (15) has on its surface area a rotationally symmetric bead (29) extending into the inside of the cone, bead which has the shape of a cone or of a cylinder.

9. Tubular transition piece (11) according to claim 8, **characterized in that** the bead (29) is provided spaced from the second opening (31) of the tubular transition piece (11).

10. Tubular transition piece (11) according to claim 5, **characterized in that** the cone (15) has a beaded rim (33) at its reduced end.

11. Tubular transition piece (11) according to any of the claims 1 to 10, **characterized in that** the inner diameter of the second opening (31) of tubular transition piece (11) approximately corresponds to the outer diameter (45) of the cylindrical part (43) of the tube segment (41).

12. Tubular transition piece (11) according to any of the claims 1 to 11, **characterized in that** the transition piece (11) is preferably made of stainless steel sheet.

13. Tube system which can be assembled (34), in particular for the fabrication of a chimney pipe comprising:
- single tube segments (35) with a first female end piece (37) with a conical surface area and a first opening and a second male end piece (39) with a conical surface area and a second opening, which second end piece (39) fits positively into the first end piece (37) and
- a tubular transition piece (11) which has a male end piece (13) with a conical surface area for a form fit into a conical surface area of a female end piece (37) of a tube segment (35),
**characterized in**
**that** the transition piece (11) has a deformable, rotationally symmetric joining surface (17) for receiving a cylindrical end piece (43).

14. Tube system which can be assembled (34) according to claim 13, **characterized in that** the tubular transition piece (11) is configured according to any of the claims 1 to 12.

## Revendications

1. Pièce de transition en forme de tube (11) à monter entre deux segments de tube (35, 41) avec une première ouverture (19) et une seconde ouverture (31), pièce de transition qui possède après la première ouverture (19) une pièce d'extrémité mâle (13) avec une surface d'enveloppe conique pour une fermeture crabotée dans une surface d'enveloppe conique d'une pièce d'extrémité femelle (37) d'un segment de tube (35),
**caractérisée en ce**
**que** la surface d'enveloppe conique de la pièce d'extrémité mâle (13) présente une surface d'assemblage symétrique en rotation (17), laquellesurface d'assemblage (17) possède un diamètre plus faible que la surface d'enveloppe conique de la pièce d'extrémité mâle (13).

2. Pièce de transition en forme de tube (11) selon la revendication 1, **caractérisée en ce que** la surface d'assemblage symétrique en rotation est prévue espacée de la première ouverture (19) de la pièce de transition (11).

3. Pièce de transition en forme de tube (11) selon la revendication 2, **caractérisée en ce que** la surface d'assemblage (17) est séparée par des degrés (21) des autres portions de la pièce d'extrémité mâle (13).

4. Pièce de transition en forme de tube (11) selon l'une des revendications 2 à 3, **caractérisée en ce que** la conicité de la surface d'assemblage symétrique en rotation (17) présente approximativement la conicité de la pièce d'extrémité mâle (13) ou la même conicité que la pièce d'extrémité mâle (13).

5. Pièce de transition en forme de tube (11) selon l'une des revendications 1 à 4, **caractérisée en ce qu'**un cône qui s'effile (15) est configuré après l'extrémité élargie de la pièce d'extrémité mâle (13).

6. Pièce de transition en forme de tube (11) selon la revendication 5, **caractérisée en ce que** la pièce d'extrémité mâle (13) et le cône (15) sont reliés par une zone de transition (23).

7. Pièce de transition en forme de tube (11) selon la revendication 6, **caractérisée en ce que** la zone de transition (23) présente un degré orienté vers l'extérieur avec des coins arrondis.

8. Pièce de transition en forme de tube (11) selon la revendication 5, **caractérisée en ce que** le cône (15) présente, sur sa surface d'enveloppe, une moulure (29) symétrique en rotation qui s'étend dans l'intérieur du cône, moulure qui a la forme d'un cône ou d'un cylindre.

9. Pièce de transition en forme de tube (11) selon la revendication 8, **caractérisée en ce que** la moulure (29) est prévue espacée de la seconde ouverture (31) de la pièce de transition en forme de tube (11).

10. Pièce de transition en forme de tube (11) selon la revendication 5, **caractérisée en ce que** le cône (15) présente, à son extrémité effilée, un bord roulé (33).

11. Pièce de transition en forme de tube (11) selon l'une des revendications 1 à 10, **caractérisée en ce que** le diamètre intérieur de la seconde ouverture (31) de la pièce de transition en forme de tube (11) correspond approximativement au diamètre extérieur (45) de la pièce cylindrique (43) du segment de tube (41).

12. Pièce de transition en forme de tube (11) selon l'une des revendications 1 à 11, **caractérisée en ce que** la pièce de transition (11) est fabriquée de préférence en tôle d'acier inoxydable.

13. Système de tubes pouvant être assemblé (34), en particulier pour fabriquer un tube de cheminée, comprenant :
- différents segments de tube (35) avec une première pièce d'extrémité femelle (37) avec une surface d'enveloppe conique et une première ouverture et une seconde pièce d'extrémité mâle (39) avec une surface d'enveloppe conique et une seconde ouverture, laquelle seconde pièce d'extrémité (39) entre de manière crabotée dans la première pièce d'extrémité (37) et
- une pièce de transition en forme de tube (11) qui possède une pièce d'extrémité mâle (13) avec une surface d'enveloppe conique pour une fermeture crabotée dans une surface d'enveloppe conique d'une pièce d'extrémité femelle (37) d'un segment de tube (35),
**caractérisé en ce**
**que** la pièce de transition (11) possède une surface d'assemblage (17) déformable symétrique en rotation pour loger une pièce d'extrémité cylindrique (43).

14. Système de tubes pouvant être assemblé (34) selon la revendication 13, **caractérisé en ce que** la pièce de transition en forme de tube (11) est configurée selon l'une des revendications 1 à 12.
